# EUROPÄISCHE PATENTSCHRIFT

(11) **EP 2 679 866 B1**
(45) Veröffentlichungstag und Bekanntmachung des Hinweises auf die Patenterteilung: **27.01.2021**
(21) Anmeldenummer: 13165382.6
(22) Anmeldetag: 25.04.2013
(51) Int. Cl.: F16H 57/04, F16H 25/20

(54) **Spindeltrieb**
Spindle drive
Entraînement à broche

(30) Priorität: 28.06.2012 DE 102012105709
(43) Veröffentlichungstag der Anmeldung: 01.01.2014
(73) Patentinhaber: WITTENSTEIN SE, 97999 Igersheim (DE)
(72) Erfinder: Schwarzbach, Michael, 97941 Tauberbischofsheim (DE)
(74) Vertreter: Zimmermann & Partner Patentanwälte mbB

(56) Entgegenhaltungen:
- EP-A2- 1 233 200
- DE-A1- 1 575 627
- DE-A1- 3 902 857
- DE-A1- 10 107 706
- DE-A1-102004 043 749
- DE-A1-102008 025 072
- DE-A1-102009 005 886
- DE-A1-102009 012 432
- DE-A1-102009 023 984
- DE-B4- 19 549 719
- GB-A- 914 165
- JP-A- 2003 269 569

## Beschreibung

### Gebiet der Erfindung

Die Erfindung betrifft einen Spindeltrieb nach dem Anspruch 1.

### Stand der Technik

Aus dem Stand der Technik sind Spindeltriebe bekannt, welche eingesetzt werden, um rotierende in lineare Bewegungen oder umgekehrt umzuwandeln. Insbesondere bei Spindeltrieben, welche in kompakten Linearaktuatoren eingebaut sind, ist ein Nachschmieren schwierig oder unmöglich, ohne dass ein Ausbau oder eine teilweise Demontage des Linearaktuators oder des Spindeltriebs erfolgt. Eine Wartung im laufenden Betrieb ist häufig vollkommen ausgeschlossen.

### Offenbarung der Erfindung

Der Erfindung liegt die Aufgabe zugrunde, aus dem Stand der Technik bekannte Spindeltriebe zu verbessern, insbesondere sollen Spindeltriebe, welche in Linearaktuatoren verbaut sind, verbessert werden, sodass ein einfaches Nachschmieren ermöglicht wird. Insbesondere soll ein Nachschmieren während des laufenden Betriebs möglich sein.

Aus der gattungsgemaßen DE 10 2009 012 432 A1 ist eine direkte Gewindetriebschmierung mit radialen Kanälen und Längskanälen eines in einer Spindel rotierenden Kanalsystems zum Zuführen oder Verteilen eines Schmiermittels bekannt. Die Schmierung umfasst weiterhin ein stationäres Kanalsystem und einen Übergaberaum zwischen stationärem und rotierendem System zum Zuführen von Schmiermittel. Aus der DE 101 07 706 A1 ist ein als Ringraum ausgebildeter Zwischenraum zur Zuführung von Schmiermittel bekannt.

Die Aufgabe wird mit einem Spindeltrieb nach dem Anspruch 1 gelöst.

Spindeltriebe von Ausführungsformen weisen eine Spindel, eine mit der Spindel zusammen wirkende Spindelmutter und eine Nachschmiereinrichtung auf. Die Nachschmiereinrichtung ist dazu geeignet, unmittelbar zwischen der Spindel und der Spindelmutter zu schmieren, wobei hierfür die Nachschmiereinrichtung einen zwischen der Spindel und der Spindelmutter, beispielsweise in einen Zwischenraum, mündenden Schmierkanalausgang aufweist. Zwischen Spindel und Spindelmutter kann ein Zwischenraum vorgesehen sein oder Spindel und Spindelmutter können aneinander anliegen oder lediglich durch einen Schmierfilm des Schmiermittels getrennt sein. Bei Ausführungsformen mit einem oder mehreren axial beabstandeten Schmierkanalausgängen mündet typischerweise zumindest ein Schmierkanalausgang unmittelbar zwischen Spindel und Spindelmutter, insbesondere bei zumindest einem Betriebszustand. Bei weiteren Ausführungsformen mündet in jedem Betriebszustand typischerweise zumindest ein Schmierkanalausgang unmittelbar zwischen Spindel und Spindelmutter oder in einen Zwischenraum zwischen Spindel und Spindelmutter.

In dem Zwischenraum zwischen der Spindel und der Spindelmutter können bei Ausführungsformen Rollkörper vorgesehen sein, welche eine Reibung zwischen Spindel und Spindelmutter verringern. Beispiele für Rollkörper können Kugeln, Rollen oder Walzen sein. Weitere Spindeltriebe weisen ein unmittelbares Zusammenwirken der Spindel mit der Spindelmutter auf.

Nachschmiersysteme von Ausführungsformen weisen ein stationäres Kanalsystem und ein mit dem stationären Kanalsystem verbundenes rotierendes Kanalsystem auf, um Schmiermittel zu dem Schmierkanalausgang zu führen. Durch die Kombination eines rotierbaren mit einem stationären Kanalsystem wird erreicht, dass ein Schmieren auch während des Systems möglich ist. Dabei ist unter dem Begriff "rotierbares" Kanalsystem verstanden, dass dieses Kanalsystem im Betrieb rotiert wird oder in einem Teil aufgenommen ist, welches während des Betriebs rotiert, beispielsweise in einer Antriebshülse, oder in einer rotierenden Spindel, falls die Ausführungsform eine rotierbare Spindel umfasst. Eine weitere Möglichkeit ist, dass das rotierbare Kanalsystem in der Spindelmutter angeordnet ist, falls diese bei der Ausführungsform im Betrieb rotiert wird. Der Ausdruck "stationär" bedeutet dabei vorzugsweise, dass das stationäre Kanalsystem in einem Bauteil oder in Bauteilen angeordnet ist, welche im Betrieb nicht rotiert werden. Noch bevorzugter ist das stationäre Kanalsystem in Bauteilen angeordnet, welche relativ zu einem im Gehäuse des Spindeltriebs nicht rotiert oder im Betrieb nicht bewegt werden. Die Kombination aus den Kanalsystemen ermöglicht eine flexible Schmierung.

Bei beanspruchten Ausführungsformen ist zwischen dem stationären Kanalsystem und dem rotierbaren Kanalsystem ein Übergaberaum angeordnet. Üblicherweise ist der Übergaberaum zumindest teilweise konzentrisch zur Längsachse der Spindel ausgebildet. Bei beanspruchten Ausführungsformen ist der Übergaberaum ringförmig ausgebildet, wobei bei einigen Ausführungsformen die Ringform Unterbrechungen aufweisen kann. Ein ringförmiger Übergaberaum bietet den Vorteil einer kontinuierlichen Beaufschlagung von Kanälen mit Schmiermittel. Ein zumindest teilweise konzentrischer Übergaberaum ermöglicht eine einfache Anordnung in einem Gehäuse oder weiteren Bauteilen des Spindeltriebs. Allgemein bietet ein Übergaberaum den Vorteil, dass eine definierte Schnittstelle zwischen dem rotierbaren Kanalsystem und dem stationären Kanalsystem geschaffen wird. Der Übergaberaum kann auch als Drehdurchführung bezeichnet werden, da an dieser Stelle ein Übergang von einem nicht rotierenden auf ein rotierendes System erfolgt. Bei beanspruchten Ausführungsformen ist der Übergaberaum in axialer Richtung beidseitig durch Wellendichtringe abgedichtet. Auf diese Weise wird gewährleistet, dass eine weitgehend verlustfreie Überführung des Schmiermittels möglich ist. Typischerweise verlaufen die stationären Schmierkanäle des stationären Kanalsystems von einer stationären, außen liegenden Position am Spindeltrieb bis zu dem Übergaberaum. Ein solcher Verlauf kann beispielsweise innerhalb von Gehäuseteilen oder Bauteilen des Gehäuses des Spindeltriebs erfolgen. Die rotierbaren Schmierkanäle des rotierbaren Kanalsystems führen typischerweise in das Innere des Spindeltriebs und erreichen dort bewegte oder zu schmierende Bauteile.

Bei typischen Ausführungsformen ist das rotierbare Kanalsystem in der Spindel angeordnet. Bei solchen Ausführungsformen ist typischerweise das stationäre Kanalsystem in einem Gehäuse des Spindeltriebs angeordnet. Bei einem in der Spindel angeordneten rotierbaren Kanalsystem handelt es sich um Ausführungsformen, bei welchen die Spindel im Betrieb rotiert. Mit einer solchen Anordnung kann über die rotierende Spindel Schmiermittel unmittelbar zwischen Spindel und Spindelmutter eingebracht werden, wobei ein Kanal oder Kanäle des rotierbaren Kanalsystems in der Spindel zu dem zumindest einen Schmierkanalausgang führen. Allgemein mündet der Schmierkanalausgang typischerweise unmittelbar zwischen Spindel und Spindelmutter, beispielsweise in den Zwischenraum oder an die Grenzfläche zwischen Spindel und Spindelmutter oder direkt auf die Oberfläche der Spindel außerhalb der Spindelmutter. Bei weiteren Ausführungsformen können noch Zwischenkanäle vorgesehen sein.

Bei üblichen Ausführungsformen mit einem rotierbaren Kanalsystem in der Spindel umfasst die Spindel einen Längskanal und zumindest einen mit dem Längskanal verbundenen radialen Kanal. Der Längskanal kann auch als axialer Kanal bezeichnet werden. Typischerweise sind jeweils zwei radiale Kanäle gegenüber liegend bezüglich der Längsachse ausgebildet. Auf diese Weise wird eine gleichmäßigere Verteilung von Schmiermittel erreicht oder eine Unwucht vermieden. Mit dem Längskanal ist es möglich, Schmiermittel über den gesamten Eingriffsbereich der Spindel zu verteilen, indem axial beabstandet eine Mehrzahl von radialen Kanälen an den Längskanal anschließen. Typischerweise münden zumindest ein Teil der radialen Kanäle unmittelbar oder mittelbar in den Schmierkanalausgang.

Bei Ausführungsformen ist die Spindel drehfest mit einem Hohlwellenrotor verbunden, wobei das rotierende Kanalsystem auch durch den Hohlwellenrotor verläuft. Eine solche Anordnung bietet den Vorteil, dass ohne Demontage des Hohlwellenrotors eine Schmierung erfolgen kann. Der Hohlwellenrotor wird typischerweise zum Antrieb der Spindel verwendet. In dem Hohlwellenrotor sind üblicherweise radiale Kanäle des rotierenden Kanalsystems angeordnet, bei Ausführungsformen können jedoch auch zusätzlich in axialer Richtung verlaufende Kanäle angeordnet sein. Allgemein sind unter dem Begriff "radialer Kanal" solche Kanäle zu verstehen, welche einen radialen Richtungsanteil aufweisen. Typischerweise kann der radiale Richtungsanteil mehr als 50 % betragen, das heißt, dass die Kanäle in einem Winkel von maximal 45 Grad relativ zu einer radialen Richtung der Spindel verlaufen.

Bei weiteren Ausführungsformen ist das rotierbare Kanalsystem in der Spindelmutter angeordnet und umfasst einen radialen Kanal. Bei Ausführungsformen mit einer rotierenden Spindelmutter bietet die Erfindung den Vorteil, dass eine Schmierung beispielsweise in der Mitte der Spindelmutter möglich ist. Bei typischen Ausführungsformen können mehrere radiale Kanäle in der Spindelmutter angeordnet sein, beispielsweise zwei oder vier jeweils gegenüberliegende um den gleichen Winkel gegeneinander verdrehte und in einer Ebene liegende Kanäle. Es können jedoch auch mehrere radiale Kanäle in mehreren Ebenen vorgesehen sein.

Ein weiterer Aspekt der Erfindung ist ein Linearaktuator mit einem Spindelantrieb in einer der oben beschriebenen Ausführungsformen. Ein solcher Linearaktuator bietet den Vorteil, dass für eine Wartung oder Schmierung keine Demontage von Gehäuse, Lagerung, Linearführung, Motorgeber oder Sensorik notwendig ist. Ein Linearaktuator ist ein typischerweise elektromechanisches Antriebssystem, welches eine Rotation in eine Linearbewegung umwandelt. Ein Rotor eines Elektromotors treibt üblicherweise einen Spindeltrieb an, der dann die Linearbewegung ausführt. Neben offenen Linearaktuatoren, bei denen der Spindeltrieb frei zugänglich ist, gibt es zunehmend geschlossene oder kompakte Linearaktuatoren. Insbesondere kompakte Linearaktuatoren zeichnen sich durch den Vorteil einer deutlich verringerten Baugröße aus. Dies kann man beispielsweise erreichen mittels eines Hohlwellenrotors, in dem der Spindeltrieb integriert ist. Gerade bei den kompakten Systemen ist der innenliegende Spindeltrieb kaum oder gar nicht zugänglich, da Bauteile wie z.B. Rotor, Stator, Gehäuse, Lagerung, Linearführung, Motorgeber oder Sensorik im Regelfall um den Spindeltrieb herum angeordnet sind, so dass dieser nicht mehr direkt zugänglich ist.

Bei Ausführungsformen wird an einem Ende eines Kanals des stationären Kanalsystems ein Schmiernippel angeordnet, um Schmiermittel manuell einbringen zu können. Bei weiteren Ausführungsformen wird ein Anschluss für eine Schmieranlage an dem stationären Kanalsystem vorgesehen, sodass eine automatische Schmiermitteleinbringung möglich ist. Bei Ausführungsformen wird das Schmiermittel bei Stillstand des Antriebs oder im laufenden Betrieb, beispielsweise bei rotierender Spindelmutter oder rotierender Spindel, eingebracht.

Ein Linearzylinder mit integriertem Spindeltrieb in Übereinstimmung mit einer der hier beschriebenen Ausführungsformen stellt ebenfalls einen Aspekt der Erfindung dar. Eine weitere Möglichkeit bei Ausführungsformen ist, den Spindeltrieb in einen elektromechanischen Linearaktuator zu integrieren. Bei solchen elektromechanischen Linearaktuatoren kann als Antriebsrotor eine Hohlwelle vorgesehen sein. Eine weitere Möglichkeit ist eine zusätzliche Integration eines Getriebes, beispielsweise auf der Antriebsseite zum Antrieb der Spindel oder der Spindelmutter.

### Kurze Beschreibung der Zeichnungen

Nachfolgend werden Ausführungsbeispiele der Erfindung anhand der beiliegenden Zeichnungen näher erläutert, wobei die Zeichnungen zeigen:
- Fig. 1: zeigt in einer schematischen Schnittansicht eine Ausführungsform;
- Fig. 2: zeigt einen Schnitt durch eine weitere Ausführungsform;
- Fig. 3: zeigt eine Schnittansicht einer weiteren Ausführungsform; und
- Fig. 4: zeigt schematisch eine weitere Ausführungsform in einer Schnittansicht.

### Beschreibung von Ausführungsformen

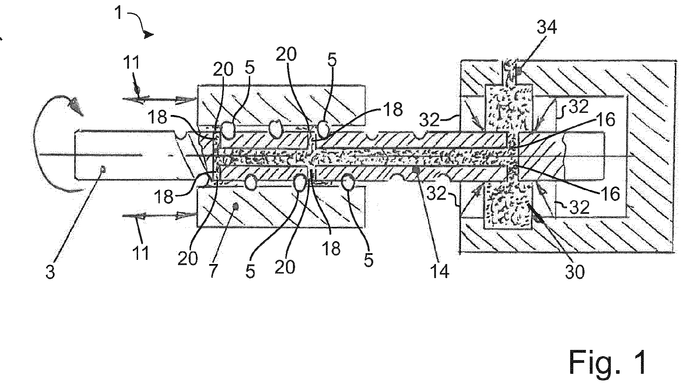

In der Fig. 1 ist eine Ausführungsform eines Spindeltriebs 1 gezeigt. Der Spindeltrieb 1 verfügt über eine Spindel 3, welche über Rollkörper 5 mit einer Spindelmutter 7 zusammenwirkt. Bei der Ausführungsform der Fig. 1 ist die Spindel 3 drehbar gelagert, wobei im Betrieb vorgesehen ist, die Spindel 3 anzutreiben, um eine Axialbewegung entlang der Doppelpfeile 11 an der Spindelmutter 7 zu erreichen.

Innerhalb der Spindel 3 ist ein rotierbares Kanalsystem vorgesehen, welches einen Längskanal 14 für Schmiermittel entlang der Mittelachse der Spindel 3 aufweist. Innerhalb der Schmiermittelkanäle ist bei allen Zeichnungen gepunktet jeweils Schmiermittel angedeutet, welches im Betrieb zumindest zeitweise in den Kanälen vorhanden ist. Das Schmiermittel ist jedoch im Allgemeinen nicht Bestandteil der Erfindung.

Der Längskanal 14 wird durch erste radiale Schmierkanäle 16 mit Schmiermittel versorgt. Das Schmiermittel wird über den Längskanal 14 zu zweiten radialen Schmierkanälen 18 geleitet, welche in Schmierkanalausgängen 20 münden. Über die Schmierkanalausgänge 20 wird Schmiermittel in einen Zwischenraum zwischen der Spindel 3 und der Spindelmutter 7 eingebracht, sodass dort die Rollkörper 5 oder der Kontakt der Rollkörper 5 mit der Spindel 3 und der Spindelmutter 7 geschmiert werden. Bei dem Ausführungsbeispiel der Fig. 1 sind in zwei Ebenen, welche axial beabstandet sind, jeweils zwei bezüglich der Rotationsachse gegenüberliegende radiale Schmierkanäle 18 mit Schmierkanalausgängen 20 vorgesehen, um eine Schmierung über einen weiten Bereich der Spindel 3 zu erreichen. Bei weiteren Ausführungsformen können weitere oder weniger radiale Schmierkanäle mit Schmierkanalausgängen vorgesehen sein.

Zur Versorgung des rotierbaren Kanalsystems in der Spindel 3 ist eine Drehdurchführung mit einem Übergaberaum 30 vorgesehen, welcher sich ringförmig konzentrisch um die Spindel im Bereich der ersten radialen Schmierkanäle 16 erstreckt. Über den Übergaberaum 30 können die ersten radialen Schmierkanäle 16 mit Schmiermittel beaufschlagt werden.

Allgemein werden bei Ausführungsformen die Schmierkanäle des rotierbaren Kanalsystems oder des stationären Kanalsystems oder beider Kanalsysteme mit freiem Querschnitt ausgeführt. Dies bedeutet beispielsweise, dass die Kanäle Werkstoff-, Metall- oder Kunststoff-frei oder frei von in dem Kanal angeordnetem Werkstoff, Metall oder Kunststoff sind. Dies bietet den Vorteil, dass Schmiermittel ungehindert ohne nennenswerten Widerstand entlang der Kanäle zugeführt werden können. Bei weiteren Ausführungsformen ist zumindest in einem Teil der Kanäle ein Werkstoff, Metall, Kunststoff oder Kunststoffschaum angeordnet, um beispielsweise eine langsame Verteilung des Schmiermittels zu erreichen.

Zur Versorgung des Übergaberaums 30, welcher durch Wellendichtungen 32 abgedichtet ist, ist ein stationäres Schmierkanalsystem vorgesehen. Das stationäre Schmierkanalsystem sieht zumindest einen radial angeordneten stationären Schmierkanal 34 in einem Gehäuse 40 vor, in welchem auch die Wellendichtungen 32 angeordnet sind. Über den stationären Schmierkanal 34 können beispielsweise über einen Schmiernippel oder eine automatische Schmieranlage Schmiermittelmischungen in das Kanalsystem eingebracht werden.

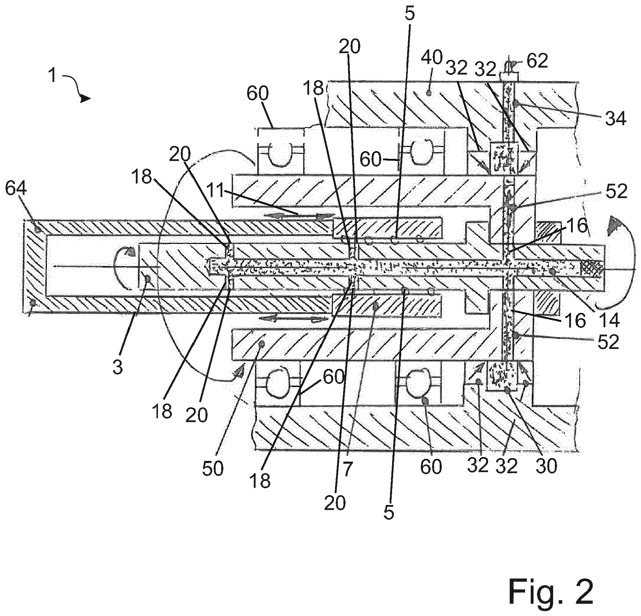

In der Fig. 2 ist eine Ausführungsform gezeigt, welche ebenfalls über eine rotierende Spindel 3 verfügt. Wiederum wird eine Spindelmutter 7 linear entlang von Doppelpfeilen 11 verfahren. Bei der Beschreibung der Fig. 2 werden für gleiche oder ähnliche Teile gleiche Bezugszeichen verwendet. Allerdings sollte klar sein, dass die Teile unterschiedlich ausgeführt sein können, wobei außerdem die Erfindung nicht auf die beschriebenen Ausführungsformen beschränkt ist, sondern vielmehr durch den Umfang der Ansprüche bestimmt wird.

Im Unterschied zu der Ausführungsform der Fig. 1 verfügt die Ausführungsform der Fig. 2 über einen Antriebsrotor, welcher wie in dem Beispiel der Fig. 2 als Hohlwellenrotor 50 ausgeführt sein kann. Mit dem Hohlwellenrotor 50 wird die Spindel 3 angetrieben und rotiert. Das rotierbare Kanalsystem ist hierbei um radiale Rotorkanäle, welche als radiale Schmierkanäle bezeichnet werden können und zu dem rotierbaren Schmierkanalsystem gehören, erweitert. Die radialen Rotorkanäle schließen unmittelbar an die zweiten radialen Schmierkanäle 18 der rotierbaren Spindel 3 an. Auf diese Weise wird erreicht, dass durch den Hohlwellenrotor 50 hindurch eine Schmiermittelzuführung möglich wird. Der Übergaberaum 30 ist dementsprechend konzentrisch ringförmig um den Hohlwellenrotor 50 im Bereich der radialen Rotorkanäle 52 angeordnet.

Bei dem Ausführungsbeispiel der Fig. 2 ist der Hohlwellenrotor 50 innerhalb eines Gehäuses 40 mit Lagern 60 gelagert. Durch das Gehäuse 40 hindurch führt ein stationärer Schmierkanal 34 zur Versorgung des Übergaberaums 30. Bei der dargestellten Ausführungsform der Fig. 2 ist der Übergaberaum 30 ringförmig konzentrisch vollständig umlaufend ausgeführt, wobei bei weiteren Ausführungsformen Unterbrechungen der Ringform vorgesehen sein können, insbesondere in Kombination mit einer Mehrzahl von stationären Schmierkanälen, welche Abschnitte eines mehrteiligen Übergaberaums versorgen können. Bei dem Ausführungsbeispiel der Fig. 2 ist an dem stationären Schmierkanal 34 ein Schmiernippel 62 an der Außenseite des Gehäuses 40 schematisch gezeigt. Mit dem Schmiernippel 62 ist eine manuelle Schmierung möglich. Bei Ausführungsbeispielen können automatische Schmieranlagen und Schmiermittel beliebig ausgetauscht werden, um eine Versorgung mit Schmiermittel zu erreichen.

Weiterhin ist in der Fig. 2 ein Schubrohr 64 gezeigt, welches schubstarr und drehfest mit der Spindelmutter 7 verbunden ist. Es sollte angemerkt werden, dass das Schubrohr 64 mit der Spindelmutter 7 ausschließlich axiale Bewegungen durchführt und drehfest gelagert ist.

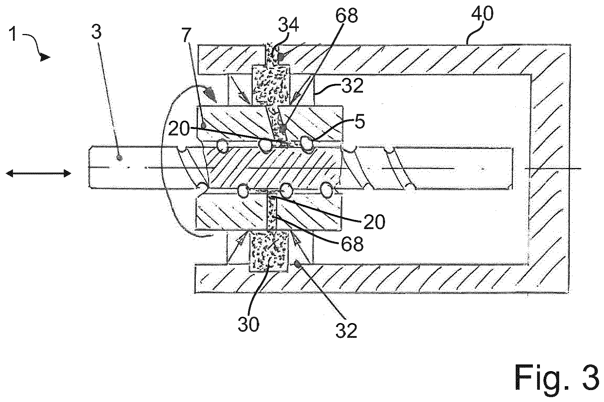

In der Skizze der Fig. 3 ist eine weitere prinzipielle Anordnung von Ausführungsformen gezeigt. Bei der Fig. 3 werden wiederum für gleiche oder ähnliche Teile gleiche Bezugszeichen verwendet. Grundsätzlich besteht bei der Ausführungsform der Fig. 3 gegenüber der Ausführungsformen der Fig. 1 und 2 der Unterschied, dass eine Drehbewegung der Spindelmutter genutzt wird, um eine Axialbewegung der Spindel zu erreichen.

Bei dem Ausführungsbeispiel der Fig. 3 ist innerhalb der Spindelmutter 7 ein rotierbares Kanalsystem vorgesehen, um den Zwischenraum zwischen Spindelmutter 7 und Spindel 3 mit den Rollkörpern 5 mit Schmiermittel zu versorgen. Hierzu sind radiale Schmierkanäle 68 vorgesehen. Dabei umfasst der Ausdruck "radial" ausdrücklich gegenüber einer radialen Richtung geneigte, beispielsweise zwischen 0° Grad und 20° Grad oder 0° Grad und 40° Grad geneigte Schmierkanäle des rotierbaren Kanalsystems. Hintergrund ist, dass wie bei dem in der Fig. 3 oben gezeigten radialen Schmierkanal 68 unter Umständen ein Ausweichen neben eine Nut der Verzahnung der Spindelmutter 7 notwendig ist, um einen freien Schmierkanalausgang 20 zu erreichen.

Wiederum ist in einem Gehäuse 40 des Spindeltriebs 1 der Fig. 3 wie bei den Spindeltrieben der Fig. 1 und 2 ein stationärer Schmierkanal 34 angeordnet, um einen Übergaberaum 30 mit Schmiermittel zu versorgen, welcher seinerseits die radialen Schmierkanäle 68 der Spindelmutter 7 mit Schmiermittel versorgt. Der Übergaberaum 30 ist mit Wellendichtungen 32 abgedichtet.

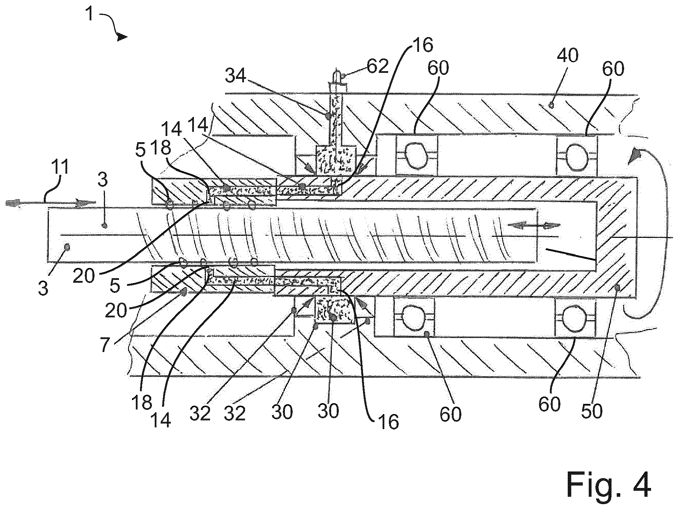

Bei Ausführungsformen umfasst das rotierbare Kanalsystem zumindest einen Längskanal, wie beispielsweise bei den Ausführungsformen der Fig. 1 und 2. Auch die Fig. 4 zeigt eine solche Ausführungsform mit zumindest einem Längskanal. Bei weiteren Ausführungsformen ist das rotierbare Kanalsystem frei von Längskanälen.

In der Fig. 4 ist eine weitere Ausführungsform gezeigt, welche gegenüber der Ausführungsform der Fig. 3 um einen Hohlwellenrotor 50 als Antriebsrotor erweitert ist. Daneben weist der Spindeltrieb 1 weitere Unterschiede auf. So weist das rotierbare Kanalsystem Längskanäle 14 auf, welche zu zweiten radialen Schmierkanälen 18 in der Spindelmutter 7 führen. Die Längskanäle 14 werden über erste radiale Schmierkanäle 16 mit Schmiermittel versorgt. Dabei führt der Längskanal 14 sowohl durch den Antriebsrotor 50 als auch durch die Spindelmutter 7. Die ersten radialen Schmierkanäle 16 liegen dabei innerhalb des Antriebsrotors 50 und könnten daher auch als radiale Rotorkanäle bezeichnet werden.

Bei dem Ausführungsbeispiel der Fig. 4 sind zwei Längskanäle 14 mit den dazugehörigen ersten und zweiten radialen Schmierkanälen 16 und 18 gezeigt. Die Längskanäle 14 verlaufen jeweils sowohl durch den Antriebsrotor 50 als auch durch die Spindelmutter 7. Bei Ausführungsformen können weitere Längskanäle vorgesehen sein, beispielsweise vier oder sechs über den Umfang verteilt. Die Längskanäle 14 werden durch einen Übergaberaum 30 und die ersten radialen Schmierkanäle 16 mit Schmiermittel versorgt. Der Übergaberaum 30 ist zwischen einem Gehäuse 40 und dem Antriebsrotor 50 angeordnet und durch Wellendichtungen 32 abgedichtet. Mit den Lagern 60 wird in dem Gehäuse 40 der Antriebsrotor 50 gelagert, welcher drehfest mit der Spindelmutter 7 verbunden ist und durch eine Drehung der Spindelmutter 7 über einen Eingriff mit Rollenkörpern 5 eine Axialbewegung der Spindel 3 entlang der Doppelpfeile 11 erreichen kann.

## Patentansprüche

1. Spindeltrieb (1), insbesondere für einen Linearaktuator, mit
- einer Spindel (3),
- einer Spindelmutter (7), welche mit der Spindel (3) zusammenwirkt, und
- einem zwischen der Spindel (3) und der Spindelmutter (7) mündenden Schmierkanalausgang (20) zum Schmieren der Spindel (3) und der Spindelmutter (7),
wobei der Spindeltrieb (1) außerdem umfasst:
- ein stationäres Kanalsystem,
- ein mit dem stationären Kanalsystem verbundenes rotierbares Kanalsystem zum Zuführen von Schmiermittel zu dem Schmierkanalausgang (20), wobei das rotierbare Kanalsystem zumindest teilweise in der Spindel (3) oder in einem Hohlwellenrotor (50) des Spindeltriebs (1) angeordnet ist und einen in der Spindel (3) oder in dem Hohlwellenrotor (50) angeordneten Längskanal (14), zumindest einen mit dem Längskanal (14) verbundenen radialen Schmierkanal (16) zum Versorgen des Längskanals (14) mit Schmiermittel, und zweite radiale Schmierkanäle (18) mit Schmierkanalausgängen (20) umfasst, und
- ein zwischen dem stationären Kanalsystem und dem rotierbaren Kanalsystem angeordneten Übergaberaum (30), wobei der Übergaberaum (30) ringförmig ausgebildet ist und mit Wellendichtungen (32) abgedichtet ist.

2. Spindeltrieb (1) nach Anspruch 1, **dadurch gekennzeichnet, dass** der Übergaberaum (30) zumindest teilweise konzentrisch zur Längsachse der Spindel (3) ausgebildet ist.

3. Spindeltrieb (1) nach Anspruch 1 oder 2, **dadurch gekennzeichnet, dass** die zweiten radialen Kanäle (18) unmittelbar in den Schmierkanalausgang (20) mündet.

4. Spindeltrieb (1) nach einem der vorhergehenden Ansprüche wobei das rotierbare Kanalsystem zumindest teilweise in der Spindel (3) angeordnet ist, **dadurch gekennzeichnet, dass** die Spindel (3) drehfest mit einem Hohlwellenrotor (50) verbunden ist, wobei das rotierbare Kanalsystem auch durch den Hohlwellenrotor (50) verläuft.

5. Spindeltrieb (1) nach einem der vorhergehenden Ansprüche, **dadurch gekennzeichnet, dass** Rollkörper (5) zwischen Spindel (3) und Spindelmutter (7) angeordnet sind.

6. Linearaktuator mit einem Spindeltrieb (1) nach einem der vorhergehenden Ansprüche.

## Claims

1. A spindle drive (1), in particular for a linear actuator, comprising
- a spindle (3),
- a spindle nut (7) which interacts with the spindle (3), and
- a lubricating channel outlet (20) for lubricating the spindle (3) and the spindle nut (7)
the spindle drive (1) further comprising
- a stationary channel system,
- a rotatable channel system connected to the stationary channel system for feeding lubricant to the lubricating channel outlet (20), wherein the rotatable channel system is arranged at least partially in the spindle (3) or in a hollow-shaft rotor (50) of the spindle drive (1) and comprises a longitudinal channel (14) arranged in the spindle (3) or in the hollow-shaft rotor (50), at least one radial lubricating channel (16) connected to the longitudinal channel (14) for supplying the longitudinal channel (14) with lubricant, and second radial lubricating channels (18) comprising lubricating channel outlets (20), and
- a transfer space (30) arranged between the stationary channel system and the rotatable channel system, wherein the transfer space (30) is of annular configuration and is sealed by shaft seals (32).

2. The spindle drive (1) according to claim 1, wherein the transfer space (30) is at least partially concentric with respect to the longitudinal axis of the spindle (3).

3. The spindle drive (1) according to claim 1 or 2, wherein the second radial channels (18) open directly into the lubricating channel outlet (20).

4. The spindle drive (1) according to any one of the preceding claims, the rotatable channel system being at least partially arranged in the spindle (3), wherein the spindle (3) is connected to a hollow-shaft rotor (3) so as to rotate with it, wherein the rotatable channel system also runs through the hollow-shaft rotor (50).

5. The spindle drive (1) according to any one of the preceding claims, wherein rolling bodies (5) are arranged between the spindle (3) and the spindle nut (7).

6. A linear actuator comprising a spindle drive (1) according to any one of the preceding claims.

## Revendications

1. Entraînement à broche (1), en particulier pour un actionneur linéaire, comprenant
- une broche (3),
- un écrou de broche (7), lequel interagit avec la broche (3), et
- une sortie de conduit de lubrification (20) débouchant entre la broche (3) et l'écrou de broche (7) pour la lubrification de la broche (3) et de l'écrou de broche (7),
sachant que l'entraînement à broche (1) comprend en outre :
- un système de conduit stationnaire,
- un système de conduit rotatif relié au système de conduit stationnaire pour l'amenée de lubrifiant à la sortie de conduit de lubrification (20), sachant que le système de conduit rotatif est disposé au moins en partie dans la broche (3) ou dans un rotor d'arbre creux (50) de l'entraînement à broche (1) et comprend un conduit longitudinal (14) disposé dans la broche (3) ou dans le rotor d'arbre creux (50), au moins un conduit de lubrification radial (16) relié au conduit longitudinal (14) pour l'alimentation du conduit longitudinal (14) en lubrifiant, et des deuxièmes conduits de lubrification radiaux (18) dotés de sorties de conduit de lubrification (20), et
- un compartiment de transfert (30) disposé entre le système de conduit stationnaire et le système de conduit rotatif, sachant que le compartiment de transfert (30) est constitué de manière annulaire et est étanchéifié avec des garnitures d'étanchéité d'arbre (32).

2. Entraînement à broche (1) selon la revendication 1, **caractérisé en ce que** le compartiment de transfert (30) est constitué au moins en partie de manière concentrique par rapport à l'axe longitudinal de la broche (3).

3. Entraînement à broche (1) selon la revendication 1 ou 2, **caractérisé en ce que** les deuxièmes conduits radiaux (18) débouchent directement dans la sortie de conduit de lubrification (20).

4. Entraînement à broche (1) selon une quelconque des revendications précédentes, sachant que le système de conduit rotatif est disposé au moins en partie dans la broche (3), **caractérisé en ce que** la broche (3) est reliée de manière solidaire en rotation à un rotor d'arbre creux (50), sachant que le système de conduit rotatif passe aussi par le rotor d'arbre creux (50).

5. Entraînement à broche (1) selon une quelconque des revendications précédentes, **caractérisé en ce que** des corps de roulement (5) sont disposés entre la broche (3) et l'écrou de broche (7).

6. Actionneur linéaire comportant un entraînement à broche (1) selon une quelconque des revendications précédentes.
